# EUROPÄISCHE PATENTSCHRIFT

(11) **EP 2 759 430 B1**
(45) Veröffentlichungstag und Bekanntmachung des Hinweises auf die Patenterteilung: **28.08.2019**
(21) Anmeldenummer: 13198304.1
(22) Anmeldetag: 19.12.2013
(51) Int. Cl.: B60J 7/06

(54) **Schiebeverdeckstruktur**
Slidable top structure
Structure de toit coulissant

(30) Priorität: 23.01.2013 DE 102013201002
(43) Veröffentlichungstag der Anmeldung: 30.07.2014
(73) Patentinhaber: BOGE Elastmetall GmbH, 49401 Damme (DE)
(72) Erfinder: Tiemann, Burkhard, 49152 Bad Essen (DE); Lagemann, Bernard, 49434 Neuenkirchen (DE)
(74) Vertreter: Bossmeyer, Jörg Peter

(56) Entgegenhaltungen:
- WO-A1-2012/038440
- WO-A2-02/092370
- DE-C2- 4 136 257

## Beschreibung

Die Erfindung betrifft eine Schiebeverdeckstruktur, insbesondere für Lastwagen, gemäß dem Oberbegriff des Anspruchs 1.

Lastwagen, das heißt Lastkraftwagen und Anhänger und Auflieger der Lastkraftwagen, sind im Stand der Technik in verschiedenen Ausgestaltungen bekannt. So sind beispielsweise die sogenannten Pritschenwagen bekannt, die eine ebene offene Ladefläche hinter der Fahrerkabine aufweisen. Um dennoch einen sicheren und trockenen Transport von Ladung zu gewährleisten, ist die Ladefläche derartiger Pritschenwagen üblicherweise mit einem Verdeck versehen. Im Stand der Technik sind hierzu feste Verdecke und Schiebeverdecke bekannt. Schiebeverdecke weisen gegenüber festen Verdecken den Vorteil auf, dass der Ladevorgang des Lastwagens, beispielsweise bei Kranbeladung, durch den Schiebemechanismus erheblich erleichtert wird, da der Laderaum hierdurch von oben zugänglich ist. Bei den aus dem Stand der Technik bekannten Schiebeverdecken weist üblicherweise ein Endlaufwagen einen Hebelarm auf, an welchem ein Portalbalken oder Endspriegel befestigt ist. Um die auf der gerüstartigen Schiebeverdeckstruktur angeordnete Plane zurückschieben zu können, wird der Hebelarm nach oben verschwenkt, so dass auch der Portalbalken oder Endspriegel über eine Laufschiene der Schiebeverdeckstruktur geschwenkt wird und über der Laufschiene mit dem Endlaufwagen zurückgefahren werden kann.

DE 41 36 257 C2 offenbart ein LKW-Schiebeverdeck mit nach oben verschwenkbarem Endspriegel, der über zwei Wagen auf Laufschienen verschiebbar geführt ist und über ein relativ hierzu verschwenkbares Spriegellager gehalten ist. An einem Wagen eines Endlenkers ist ein Führungshebel angelenkt, dessen anderes Ende im Bereich des Endspriegels am Spriegellager schwenkbar befestigt ist. Am Wagen ist ebenfalls ein Betätigungshebel schwenkbar angeordnet, dessen eines Ende mit dem Endspriegel gegenüber liegenden Ende des Spriegellagers schwenkbar verbunden ist und dessen anderes Ende schwenkbar mit einem Ende einer Feder in Verbindung steht, die mit ihrem anderen Ende am Wagen schwenkbar angeordnet ist.

Problematisch bei den aus dem Stand der Technik bekannten Schiebeverdecken ist jedoch, dass beim Öffnen des Schiebeverdecks sich der nach oben verschwenkbare Endspriegel bzw. Portalbalken im Wesentlichen auf einer Kreisbahn nach oben bewegt, wozu in dieser Richtung ausreichend Raum verfügbar sein muss. Bei niedrigen Decken von Verladegebäuden ist jedoch dieser Raum nach oben nicht vorhanden, so dass ein derartig ausgestaltetes Schiebeverdeck nicht geöffnet werden kann.

Auch das Schließen eines derartigen Schiebeverdecks ist schwierig, da der Portalbalken oder der Endspriegel nach oben klappt und das Verdeck beispielsweise nur über eine entsprechend an dem Portalbalken angeordnete Schlaufe wieder geschlossen werden kann. Zum Beispiel können typische Portalbalken an der Unterseite hierzu auch einen Eingriff aufweisen, in welchem mittels einer Stange mit entsprechenden endseitigen Haken der Benutzer den Portalbalken wieder nach unten ziehen kann. Dies gestaltet sich bei den bekannten Schiebeverdecckonfigurationen jedoch schwierig, da der Portalbalken - wie oben erwähnt - von seiner Ausgangsstellung beim Öffnen nach oben verkippt wird und in dieser Position dann ein sicherer Eingriff nicht herstellbar ist.

Daher ist es eine Aufgabe der vorliegenden Erfindung, eine Schiebeverdeckstruktur für einen Lastwagen bereitzustellen, die auch bei niedrigen Raumhöhen einfach und unproblematisch zu öffnen und zu schließen ist.

Diese Aufgabe wird durch eine Schiebeverdeckstruktur mit den Merkmalen gemäß Anspruch 1 gelöst. Bevorzugte Ausführungsformen der Erfindung sind in den abhängigen Ansprüchen definiert.

Die Erfindung schlägt eine Schiebeverdeckstruktur vor, insbesondere für einen Lastwagen, mit einer Vielzahl von Spriegeln, welche quer zwischen zwei jeweils mit Laufschienen versehenen Längsgurten anordenbar sind, und entlang der Längsgurte verschiebbar sind, und mit einem Portalbalken, einer schwenkbaren Verbindungsstruktur und zwei auf den Laufschienen der Längsgurte beweglichen Endlaufwagen, wobei der Portalbalken an seinen gegenüberliegenden Enden jeweils mit einem der zwei Endlaufwagen über die Verbindungsstruktur verbunden ist, und wobei der Portalbalken seinerseits schwenkbar an der Verbindungsstruktur angeordnet ist. Durch schwenkbares Anordnen des Portalbalkens an der Verbindungsstruktur kann dieser beim Aufstellen stets in einer Position gehalten werden, die das geringste Raumerfordernis bzw. den geringsten Höhenbedarf hat, so dass das Schiebeverdeck auch bei niedrigen Deckenhöhen geöffnet werden kann. Dies bedeutet, dass der Portalbalken durch seine schwenkbare Ausgestaltung beim Öffnen gar nicht bzw. nur unwesentlich verkippt wird. Dies verringert nicht nur das Raumerfordernis beim Öffnen des Schiebeverdecks, sondern macht auch das Schließen des Schiebeverdecks leichter, da beispielsweise eine an dem Portalbalken angeordnete Schlaufe, wie sie im Stand der Technik bekannt ist, um den Portalbalken mittels einer Stange mit endseitigem Haken wieder herunterzuklappen, nicht mehr notwendig ist. Die Anwendung der Schiebeverdeckstruktur für einen Lastwagen umfasst sowohl die Anwendung für eine angetriebene Zugmaschine als auch für einen gezogenen Anhänger oder Auflieger. Alternativ sind auch andere Anwendungen vorstellbar, beispielsweise für eine Schiebeverdeckstruktur eines Sightseeing-Busses oder eines anderen Sonderfahrzeugs. Die Schiebeverdeckstruktur kann allgemein Straßenfahrzeugen oder schienengebundenen Fahrzeugen zugeordnet sein, wobei ein Öffnen bzw. Schließen der Schiebeverdeckstruktur je nach Anordnung derselben in Fahrzeuglängs- oder in Fahrzeugquerrichtung erfolgen kann. Weiterhin kann die Schiebeverdeckstruktur auch einer stationären Einrichtung wie beispielsweise einem Container zugeordnet sein.

Gemäß einer bevorzugten Ausführungsform weist die Verbindungsstruktur eine Vorrichtung auf, die beim Schwenken der Verbindungsstruktur um eine erste Schwenkachse ein Verkippen des Portalbalkens um eine zweite Schwenkachse entgegen der Schwenkrichtung der Verbindungsstruktur bewirkt. Die Vorteile dieser Gegenbewegung bestehen darin, dass der Portalbalken ohne wesentliches Verkippen noch oben geführt wird. Typische Portalbalken weisen, wie oben bereits erwähnt, einen Eingriff auf, mittels welchem das Schiebeverdeck geschlossen werden kann. Wird der Portalbalken beim Öffnen nur unwesentlich verkippt, dann ist dieser Eingriff zum Schließen des Verdecks leicht erreichbar und das Verdeck kann auf einfache und sichere Weise wieder geschlossen werden.

Gemäß noch einer bevorzugten Ausführungsform kippt die Vorrichtung den Portalbalken beim Öffnen des Schiebeverdecks mit einem Kippwinkel um die zweite Schwenkachse herum, welcher kleiner als 10° ist, bevorzugt mit einem Kippwinkel zwischen 2° und 10°, besonders bevorzugt mit einem Kippwinkel von 5°. Denn um die Anlage des Portalbalkens weiter zu verbessern, ist es vorteilhaft, dass beim Hochfahren des Portalbalkens dieser nicht exakt waagerecht gehalten wird, sondern eine geringfügige Schwenkbewegung in Richtung der Öffnungsbewegung in dem oben genannten Winkelbereich vollführt. Hierdurch kann beim Schließen des Portalbalkens die sichere Anlage an den entsprechenden Anlageflächen sichergestellt werden.

Gemäß noch einer weiteren bevorzugten Ausführungsform wird die Verbindungsstruktur gebildet durch jeweils zwei Schenkel, welche an den gegenüberliegenden Enden des Portalbalkens angeordnet sind, die jeweils mit einem Ende in Lagerpunkten an einem der Endlaufwagen angelenkt sind und mit dem anderen Ende in Lagerpunkten an dem Portalbalken angelenkt sind, wobei die Lagerpunkte und die Schenkel im Wesentlichen ein Parallelogramm definieren.

Darüber hinaus ist es bevorzugt, wenn die zwei Schenkel des Parallelogramms in einer Ebene, insbesondere in einer Ebene parallel zu den Längsgurten, angeordnet sind.

Vorzugsweise weist jeweils zumindest ein Schenkel von den zwei Schenkeln des Parallelogramms ein im Wesentlichen U-förmiges Profil auf.

Gemäß einer weiteren bevorzugten Ausführungsform kann der Schenkel, der das U-förmige Profil aufweist, den jeweils anderen Schenkel des Parallelogramms aufnehmen. Das U-förmige Profil bildet eine Ausnehmung, in welcher der andere Schenkel aufnehmbar ist, so dass in der Schließposition des Schiebeverdecks eine platzsparende bzw. flache Lagerung der beiden Schenkel ermöglicht wird.

Vorzugsweise ist darüber hinaus der gesamte Endlaufwagen derartig ausgebildet, dass bei heruntergelassenem Portalbalken - d. h. bei geschlossenem Schiebeverdeck - die restlichen Bauelemente, abgesehen von dem Portalbalken selbst, eine Gesamtbauhöhe von lediglich 35 mm aufweisen.

Vorteilhaft ist weiterhin, wenn an den gegenüberliegenden Enden des Portalbalkens jeweils ein Federelement an der Verbindungsstruktur vorgesehen ist, insbesondere eine Gasdruckfeder, welches nach Überwinden eines vorbestimmten Punktes ein automatisches selbsttätiges Öffnen bzw. Schließen bewirkt.

Alternativ kann die Verbindungsstruktur gebildet werden durch jeweils einen Schenkel an beiden Enden des Portalbalkens und jeweils einen Seilzugmechanismus, mittels welchem das Verkippen bewirkt wird. Der Schenkel bildet einen Hebelarm, an welchem der Portalbalken schwenkbar angeordnet ist. Mittels des Seilzugmechanismus kann eine entsprechende Gegenbewegung beim Öffnen des Schiebeverdecks bewirkt werden, so dass ein Verkippen des Portalbalkens nur in dem oben bereits genannten Winkelbereich erfolgt.

Vorzugsweise ist der Portalbalken als ein im Wesentlichen L-förmiges Profil mit einer ersten horizontalen Platte und einer zweiten vertikalen Platte, welche senkrecht von der ersten Platte nach unten abragt, ausgebildet.

An dem Portalbalken kann ferner vorzugsweise eine Eingriffsvorrichtung vorgesehen sein, in welche eine Zugvorrichtung eingehängt werden kann, um den Portalbalken zum Schließen des Schiebeverdecks herunterzuziehen.

Darüber hinaus ist es vorteilhaft, wenn der Portalbalken an beiden Enden jeweils eine keilförmige Schräge aufweist, welche beim Öffnen des Schiebeverdecks in dazu korrespondierende keilförmige Schrägen auf den Laufschienen in Anlage kommen. Hierdurch wird eine sichere Anlage des Portalbalkens gewährleistet, wobei insbesondere beim Überfahren von Unebenheiten etwaige Klappergeräusche vermieden werden.

Vorzugsweise ist an dem Portalbalken eine Klappe mit Schwenkmechanismus entlang der Längsrichtung des Portalbalkens angeordnet. Dies ist insbesondere bei Ausführungen von Trailern mit Hebebühne vorteilhaft. Die hochgeklappte Hebebühne deckt einen Teil der hinteren Öffnung ab. Der obere Teil wird dann durch die oben erwähnte Klappe bedeckt, welche beim Öffnen um etwa 90° nach oben schwenkbar ist. Dadurch, dass der Portalbalken, wie oben beschrieben, nicht bzw. nur unwesentlich beim Öffnen des Schiebeverdecks verkippt, und das gleiche dann auch für die daran vorgesehene Klappe gilt, kann die Klappe auch innerhalb eines Gebäudes mit niedriger Raumhöhe gut geöffnet werden, was bei den aus dem Stand der Technik bekannten Vorrichtungen nicht möglich ist, da die Klappe beim Öffnen dort weit nach oben absteht.

Gemäß einer weiteren bevorzugten Ausführungsform ist der vordere Schenkel des Parallelogramms aus Kunststoff und der hintere Schenkel ist aus Metall gefertigt.

Gemäß noch einer weiteren bevorzugten Ausführungsform ist zwischen der Verbindungsstruktur und dem Portalbalken ein Verbindungselement angeordnet.

Im Nachfolgenden werden Ausführungsformen der Erfindung unter Bezugnahme auf die beigefügte Zeichnung näher beschrieben. Es zeigen:
Fig. 1 eine Schiebeverdeckstruktur gemäß einer Ausführungsform der Erfindung;
Fig. 2 eine Detailansicht eines vorderen Abschnitts der in Fig. 1 dargestellten Schiebeverdeckstruktur gemäß einer Ausführungsform der Erfindung ohne Portalbalken;
Fig. 3 eine Detailansicht des vorderen Abschnitts einer Schiebeverdeckstruktur gemäß Figur 1 mit Portalbalken;
Fig. 4A, 4B verschiedene Ansichten der Schiebeverdeckstruktur gemäß Figur 1 in geschlossenem Zustand;
Fig. 5A, 5B verschiedene Ansichten der Schiebeverdeckstruktur gemäß Figur 1 in teilweise geöffnetem Zustand;
Fig. 6A, 6B verschiedene Ansichten der Schiebeverdeckstruktur gemäß Figur 1 in teilweise geöffnetem Zustand; und
Fig. 7 eine Ansicht eines hinteren Abschnitts einer Schiebeverdeckstruktur gemäß Figur 1 in geöffnetem Zustand.

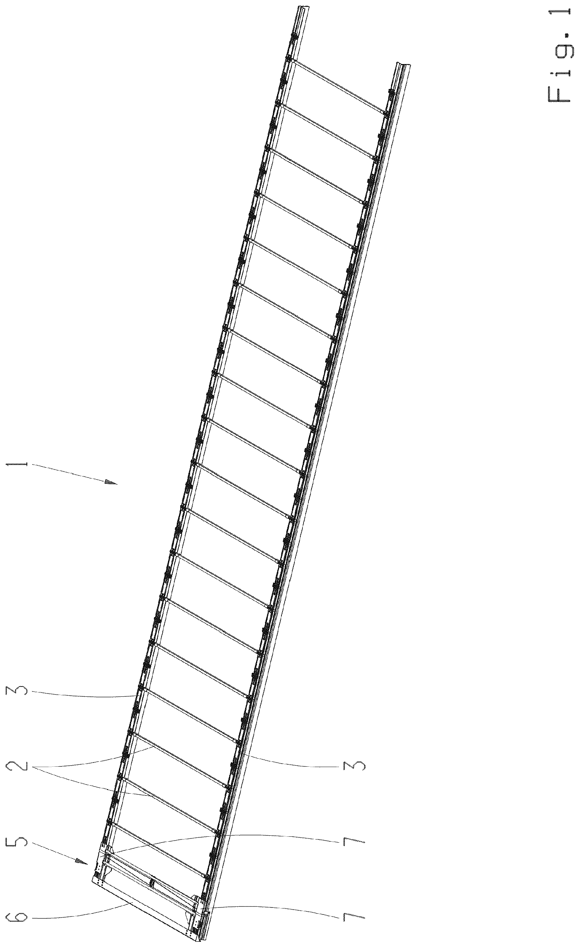

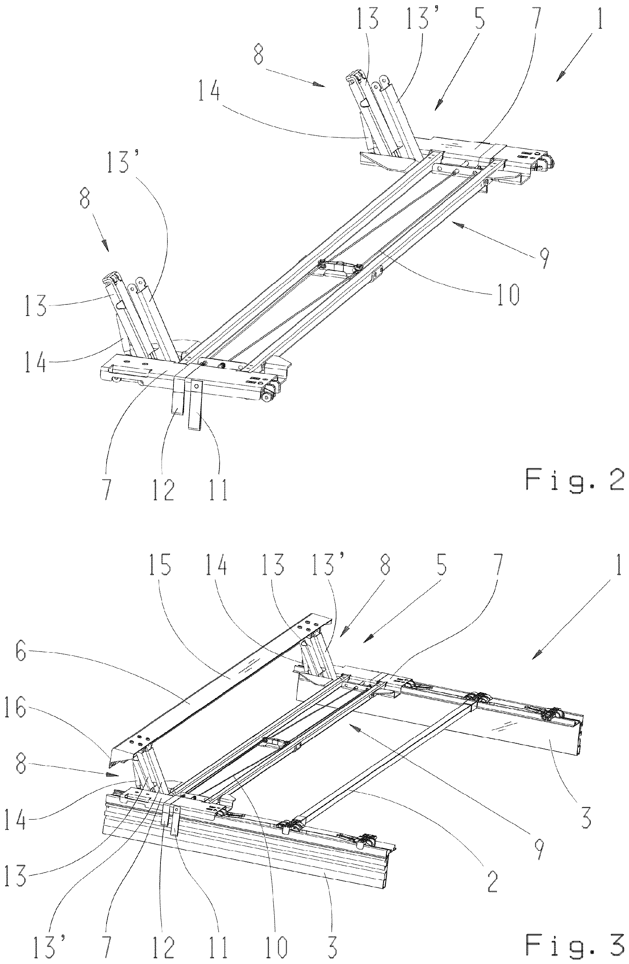

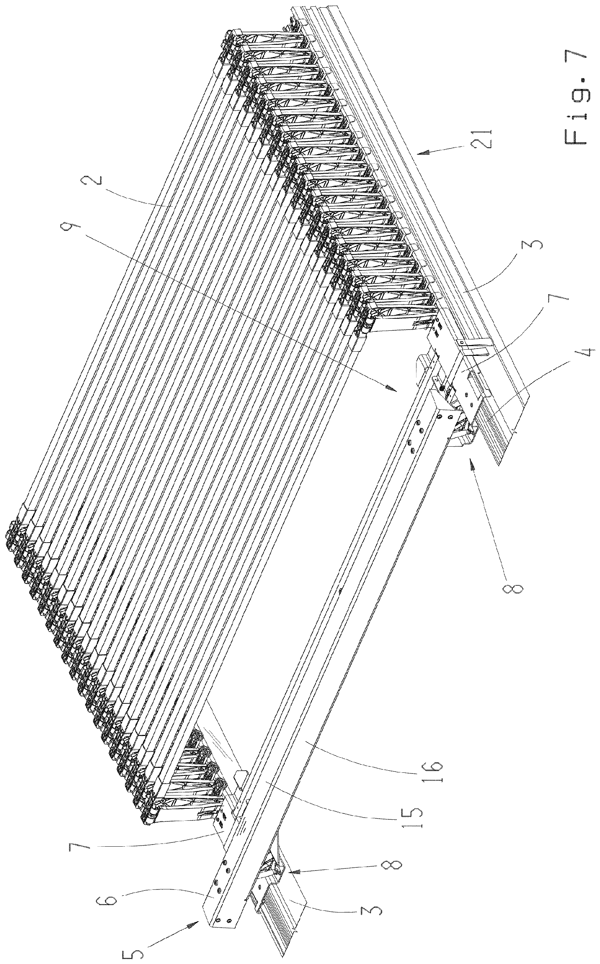

Figur 1 zeigt eine Schiebeverdeckstruktur 1 für Lastwagen gemäß einer Ausführungsform der Erfindung, welche hier in ausgefahrenem bzw. geschlossenem Zustand dargestellt ist. Die Schiebeverdeckstruktur 1 umfasst eine Vielzahl von Spriegeln 2, welche quer zwischen zwei parallel zueinander verlaufenden Längsgurten 3 angeordnet sind. Die Längsgurte 3 sind jeweilig mit einer Laufschiene 4 (siehe Figur 7) versehen, auf welcher eine Vielzahl von hier nicht näher dargestellten Laufwagen verschiebbar angeordnet sind, welche mit den Spriegeln 2 verbunden sind, um diese entlang der Laufschienen 4 zu bewegen. Nicht jeder Spriegel 2 ist mit einem Laufwagen verbunden, sondern es ist lediglich für jeden achten Spriegel 2 ein Laufwagen vorgesehen. Die Spriegel 2 sind untereinander über hier ebenfalls nicht im Detail dargestellte Faltplatten verbunden. An einem vorderen Ende 5 der Schiebeverdeckstruktur 1, was dem hinteren Ende eines Lastwagens entspricht, ist darüber hinaus ein Portalbalken 6 quer zwischen den beiden Längsgurten 3 angeordnet, welcher den Abschluss der Schiebeverdeckstruktur 1 bildet. Der Portalbalken 6 ist über eine Verbindungsstruktur, welche näher in Verbindung mit den Figuren 2 bis 6 beschrieben werden wird, mit auf den Laufschienen 4 beweglichen Endlaufwagen 7 verbunden und somit mit diesen entlang der Laufschienen 4 verschiebbar.

Figur 2 ist eine Detailansicht eines vorderen Abschnitts der in Figur 1 dargestellten Schiebeverdeckstruktur 1 gemäß einer Ausführungsform der Erfindung, hier jedoch ohne den Portalbalken 6 dargestellt. Auf den Endlaufwagen 7 ist eine Verbindungsstruktur 8 vorgesehen bzw. um eine erste Schwenkachse der Verbindungsstruktur 8 herum schwenkbar angeordnet. Weiterhin ist auf den Endlaufwagen 6 ein Entriegelungsmechanismus 9 mit einem Seilzug 10 vorgesehen, welcher über die Betätigungseinrichtungen 11 und 12, welche hier schlaufenförmig aus gebildet sind, betätigbar ist, um die Endlaufwagen 6 zu arretieren oder freizugeben. Wie hier erkennbar ist, umfasst die Verbindungsstruktur 8 auf jeder Seite der Schiebeverdeckstruktur 1 jeweils zwei Schenkel 13, 13', welche in der Längsrichtung der Längsgurte 3 jeweils hintereinander angeordnet sind. Die beiden so gebildeten Schenkelpaare sind identisch ausgebildet. An dem jeweils vorderen Schenkel 13 der beiden Schenkelpaare ist weiterhin eine Gasdruckfeder 14 angeordnet, welche ein automatisches Öffnen und Schließen des Schiebeverdecks ermöglicht.

Figur 3 ist eine Detailansicht des vorderen Abschnitts der Schiebeverdeckstruktur 1 gemäß Figur 1, hier jedoch mit dem Portalbalken 6 dargestellt. Wie hier erkennbar ist, ist der Portalbalken 6 im Wesentlichen als L-förmiges Profil mit einer ersten horizontalen Platte 15 und einer zweiten vertikalen Platte 16 ausgebildet, welcher senkrecht von der ersten Platte nach unten hin abragt. Die erste horizontale Platte 15 ist an den Schenkeln 13, 13' fixiert, wie weiter unten noch näher erläutert wird.

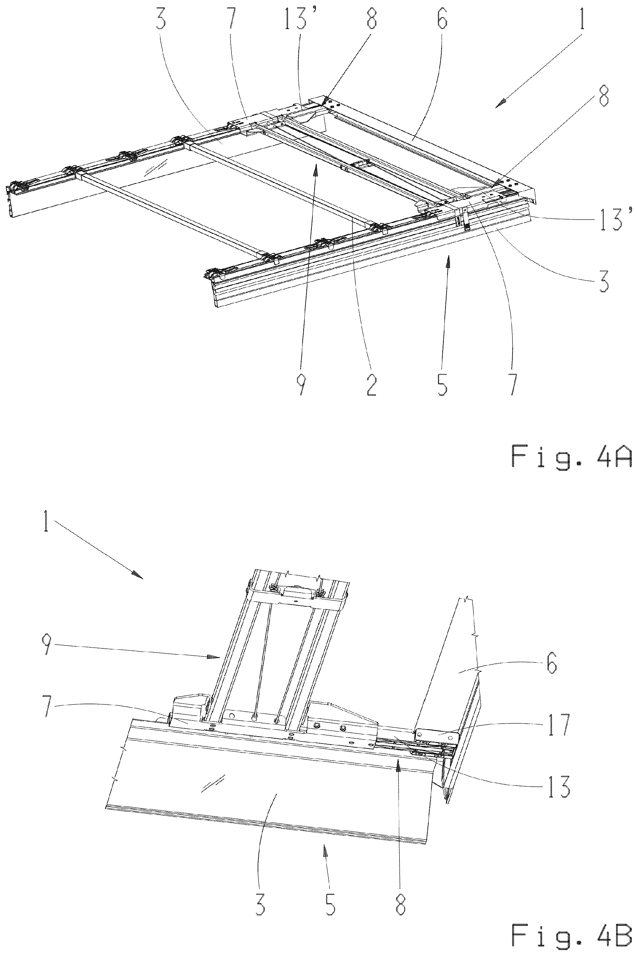

Figuren 4A und 4B zeigen verschiedene Ansichten der Schiebeverdeckstruktur 1 gemäß Figur 1, welche in geschlossenem Zustand bzw. vollständig ausgefahren ist. Figur 4A zeigt dabei einen Abschnitt des vorderen Endes 5 von schräg oben und Figur 4B zeigt ein Detail des Abschnitts von Figur 4A von unten. Wie hier erkennbar ist, liegt bei geschlossenem Zustand der Schiebeverdeckstruktur 1 die Verbindungsstruktur 8 bzw. die Schenkel 13, 13' flach an den Längsgurten 3 an bzw. ist darin aufgenommen. Um dies zu ermöglichen, weist jeweils der hintere Schenkel 13' der beidseitigen Schenkelpaare 13, 13' ein U-förmiges Profil auf, welches eine Ausnehmung bildet, in welche jeweils der vordere Schenkel 13 der beidseitigen Schenkelpaare 13, 13' aufnehmbar ist, was besonders platzsparend ist. Weiterhin ist in der in Figur 4B dargestellten Ansicht von unten erkennbar, dass die Verbindungsstruktur 8 mittelbar an dem Portalbalken 6 über ein Verbindungselement 17 verbunden ist.

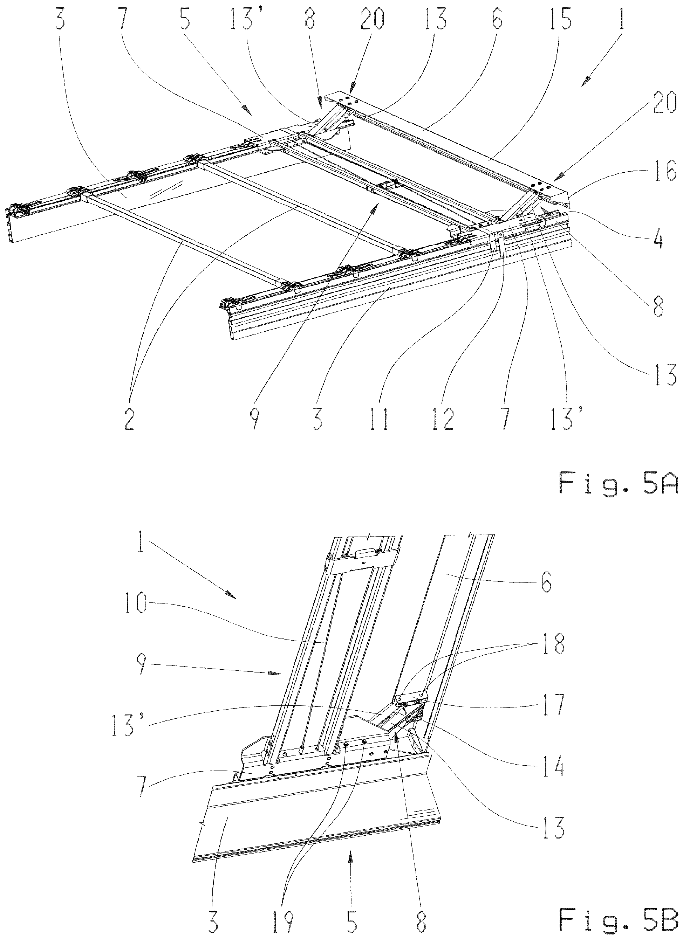

Figuren 5A und 5B zeigen verschiedene Ansichten der Schiebeverdeckstruktur 1 gemäß Figur 1 in teilweise geöffnetem Zustand, in welchem die Schenkel 13, 13' der Verbindungsstruktur 8 in einem Winkel von etwa 30° gegenüber der Horizontalen aufgestellt sind. Figur 5A zeigt dabei einen Abschnitt des vorderen Endes 5 von schräg oben und Figur 5B zeigt ein Detail des Abschnitts von Figur 5A von unten. Wie hier gut erkennbar ist, verbleibt der Portalbalken 6 im Wesentlichen in einer gleichen Orientierung wie in dem geschlossenen Zustand (siehe Figur 4A, 4B), wobei die erste Platte 15 im Wesentlichen horizontal ausgerichtet ist und die sich daran anschließende zweite Platte 16 im Wesentlichen vertikal ausgerichtet ist. Dies wird durch die Verbindungsstruktur 8 ermöglicht, bei welcher die Lagerpunkte 19 der Schenkel 13, 13' mit jeweils einem ihrer Enden an dem Endlaufwagen 7 und mit jeweils dem anderen ihrer Enden mittelbar an dem Portalbalken 6 bzw. mit dem Verbindungselement 17 an den Verbindungspunkten bzw. Lagerpunkten 18 zusammen mit den Schenkeln 13, 13' ein Parallelogramm definieren. Dabei sind die Schenkel 13, 13' jeweils um eine erste Schwenkachse an ihrem endlaufwagenseitigen Ende schwenkbar und sind auch jeweils um eine zweite Schwenkachse an ihrem portalbalkenseitigen Ende schwenkbar. Der Portalbalken 6 ist seinerseits ebenfalls schwenkbar an der Verbindungsstruktur 8 angeordnet, so dass ermöglicht wird, dass der Portalbalken 6 beim Öffnen der Schiebeverdeckstruktur 1 entgegen der durch die Verbindungsstruktur 8 vorgegebenen Schwenkrichtung leicht verkippbar ist. Dies geschieht jedoch lediglich mit einem maximalen Kippwinkel von 10°. Bevorzugt ist ein Kippwinkel von 5°. Weiterhin erkennbar in der Figur 5A ist darüber hinaus die Verbindung 20 des Portalbalkens 6 mit dem Verbindungselement 17 bzw. mittelbar mit den Schenkeln 13, 13' der Verbindungsstruktur 8.

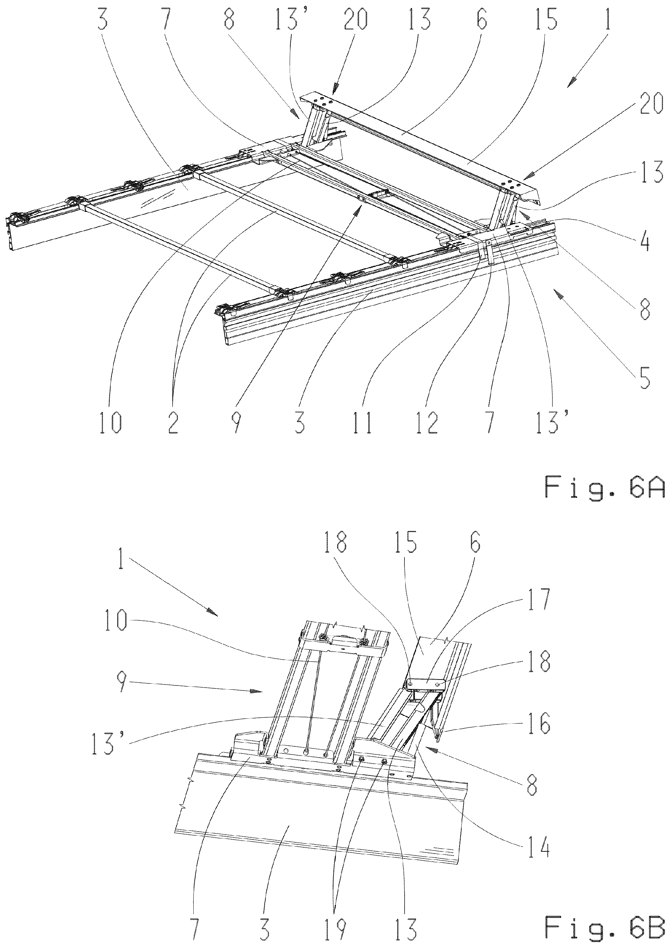

Fig. 6A, 6B zeigen verschiedene Ansichten der Schiebeverdeckstruktur 1 gemäß Figur 1 in teilweise geöffnetem Zustand, wobei sich die Schenkel 13, 13' der Verbindungsstruktur 8 hier bereits in einem Winkel von 63° gegenüber der Horizontalen aufgestellt haben. Wie hier erkennbar ist, befindet sich auch hier der Portalbalken 6 immer noch in der gleichen Orientierung, in welcher die erste Platte 15 im Wesentlichen horizontal ausgerichtet ist und die zweite Platte 16 im Wesentlichen vertikal ausgerichtet ist.

Fig. 7 ist schließlich eine Ansicht eines hinteren Endes 21 einer Schiebeverdeckstruktur 1 gemäß Figur 1 in geöffnetem Zustand. Wie hier erkennbar ist, sind alle Spriegel 2 zusammengeschoben an dem hinteren Ende 21 angeordnet, wobei die Spriegel 2 in Fahrzeuglängsrichtung betrachtet jeweils beabstandet sind. Durch diesen Abstand wird ein Zwischenraum zur Aufnahme einer Verdeckplane im geöffneten Zustand der Schiebeverdeckstruktur 1 geschaffen. Auch der Endlaufwagen 7 mit dem darauf angeordneten Portalbalken 6 ist an das hintere Ende verschoben. Der Portalbalken 6 ist dabei über die Verbindungsstruktur 8 in im Wesentlichen gleicher Orientierung nach oben angehoben worden, wobei die Schenkel 13, 13' der Verbindungsstruktur 8 hier nahezu einen rechten Winkel mit der Horizontalen einschließen. Jedoch ist die erste Platte 15 des Portalbalkens 6 dabei im Wesentlichen horizontal ausgerichtet, wie es ebenfalls bei geschlossenem Verdeck der Fall ist.

### Bezugszeichen

- 1: Schiebeverdeckstruktur
- 2: Spriegel
- 3: Längsgurte
- 4: Laufschiene
- 5: vorderes Ende der Schiebeverdeckstruktur
- 6: Portalbalken
- 7: Endlaufwagen
- 8: Verbindungsstruktur
- 9: Entriegelungsmechanismus
- 10: Seilzug
- 11: Betätigungseinrichtung
- 12: Betätigungseinrichtung
- 13, 13': Schenkel der Verbindungsstruktur
- 14: Gasdruckfeder
- 15: horizontale Platte
- 16: vertikale Platte
- 17: Verbindungselement
- 18: Verbindungspunkte bzw. Lagerpunkte
- 19: Lagerpunkte
- 20: Verbindung
- 21: hinteres Ende der Schiebeverdeckstruktur

## Patentansprüche

1. Schiebeverdeckstruktur (1), insbesondere für einen Lastwagen, mit einer Vielzahl von Spriegeln (2), welche quer zwischen zwei jeweils mit Laufschienen (4) versehenen Längsgurten (3) anordenbar sind und entlang der Längsgurte (3) verschiebbar sind, und mit einem Portalbalken (6), einer schwenkbaren Verbindungsstruktur (8) und zwei auf den Laufschienen (4) der Längsgurte (3) beweglichen Endlaufwagen (7), wobei der Portalbalken (6) an seinen gegenüberliegenden Enden jeweils mit einem der zwei Endlaufwagen (7) über die Verbindungsstruktur (8) verbunden ist, **dadurch gekennzeichnet, dass** der Portalbalken (6) seinerseits schwenkbar an der Verbindungsstruktur (8) angeordnet ist.

2. Schiebeverdeckstruktur (1) gemäß Anspruch 1, **dadurch gekennzeichnet, dass** die Verbindungsstruktur (8) eine Vorrichtung aufweist, die beim Schwenken der Verbindungsstruktur (8) um eine erste Schwenkachse ein Verkippen des Portalbalkens (6) um eine zweite Schwenkachse entgegen der Schwenkrichtung der Verbindungsstruktur (1) bewirkt.

3. Schiebeverdeckstruktur (1) gemäß Anspruch 2, **dadurch gekennzeichnet, dass** die Vorrichtung den Portalbalken (6) beim Öffnen des Schiebeverdecks mit einem Kippwinkel um die zweite Schwenkachse herum kippt, welcher kleiner als 10° ist, bevorzugt mit einem Kippwinkel zwischen 2° und 10°, besonders bevorzugt mit einem Kippwinkel von 5°.

4. Schiebeverdeckstruktur (1) gemäß Anspruch 2 oder 3, **dadurch gekennzeichnet, dass** die Verbindungsstruktur (8) gebildet wird durch jeweils zwei Schenkel (13, 13'), welche an den gegenüberliegenden Enden des Portalbalkens (6) angeordnet sind, die jeweils mit einem Ende in Lagerpunkten (19) an einem der Endlaufwagen (7) angelenkt sind und mit dem anderen Ende in Lagerpunkten (18) an dem Portalbalken (6) angelenkt sind, wobei die Lagerpunkte (18, 19) und die Schenkel (13, 13') ein Parallelogramm definieren.

5. Schiebeverdeckstruktur (1) gemäß Anspruch 4, **dadurch gekennzeichnet, dass** die zwei Schenkel (13, 13') des Parallelogramms in einer Ebene, insbesondere in einer Ebene parallel zu den Längsgurten (3), angeordnet sind.

6. Schiebeverdeckstruktur (1) gemäß Anspruch 4 oder 5, **dadurch gekennzeichnet, dass** jeweils zumindest ein Schenkel (13') von den zwei Schenkeln (13, 13') des Parallelogramms ein im Wesentlichen U-förmiges Profil aufweist.

7. Schiebeverdeckstruktur (1) gemäß Anspruch 6, **dadurch gekennzeichnet, dass** der Schenkel (13'), der das U-förmige Profil aufweist, den jeweils anderen Schenkel (13) des Parallelogramms aufnehmen kann.

8. Schiebeverdeckstruktur (1) gemäß einem der vorherigen Ansprüche, **dadurch gekennzeichnet, dass** an den gegenüberliegenden Enden des Portalbalkens (6) jeweils ein Federelement (14) an der Verbindungsstruktur (8) vorgesehen ist, insbesondere eine Gasdruckfeder, welches nach Überwinden eines vorbestimmten Punktes ein selbsttätiges Öffnen bzw. Schließen bewirkt.

9. Schiebeverdeckstruktur (1) gemäß Anspruch 1 oder 2, **dadurch gekennzeichnet, dass** die Verbindungsstruktur (8) gebildet wird durch jeweils einen Schenkel (13) an beiden Enden des Portalbalkens (6) und jeweils einen Seilzugmechanismus, mittels welchem das Verkippen bewirkt wird.

10. Schiebeverdeckstruktur (1) gemäß einem der Ansprüche 1 bis 9, **dadurch gekennzeichnet, dass** der Portalbalken (6) als ein im Wesentlichen L-förmiges Profil mit einer ersten horizontalen Platte (15) und einer zweiten vertikalen Platte (16), welcher senkrecht von der ersten Platte (15) nach unten abragt, ausgebildet ist.

11. Schiebeverdeckstruktur (1) gemäß einem der Anspüche 1 bis 10, **dadurch gekennzeichnet, dass** am Portalbalken (6) eine Eingriffsvorrichtung vorgesehen ist, in welche eine Zugvorrichtung eingehängt werden kann, um den Portalbalken (6) zum Schließen des Schiebverdecks herunterzuziehen.

12. Schiebeverdeckstruktur (1) gemäß einem der Ansprüche 1 bis 11, **dadurch gekennzeichnet, dass** der Portalbalken (6) an beiden Enden jeweils eine keilförmige Schräge aufweist, welche beim Öffnen des Schiebeverdecks in dazu korrespondierende keilförmige Schrägen auf den Laufschienen (4) in Anlage kommen.

13. Schiebeverdeckstruktur (1) gemäß einem der Ansprüche 1 bis 12, **dadurch gekennzeichnet, dass** an dem Portalbalken (6) eine Klappe mit Schwenkmechanismus entlang der Längsrichtung des Portalbalkens (6) angeordnet ist.

14. Schiebeverdeckstruktur (1) gemäß einem der Ansprüche 4 bis 13, **dadurch gekennzeichnet, dass** der vordere Schenkel (13') des Parallelogramms aus Kunststoff und der hintere Schenkel (13) aus Metall gefertigt ist.

15. Schiebeverdeckstruktur (1) gemäß einem der Ansprüche 1 bis 14, **dadurch gekennzeichnet, dass** zwischen der Verbindungsstruktur (8) und dem Portalbalken (6) ein Verbindungselement (20) angeordnet ist.

## Claims

1. Sliding roof structure (1), in particular for a truck, having a plurality of bows (2), which can be arranged transversely between two longitudinal belts (3) respectively provided with running rails (4) and which are displaceable along the longitudinal belts (3), and having a gantry beam (6), a pivotable connecting structure (8) and two movable end carriages (7) on the running rails (4) of the longitudinal belts (3), wherein the gantry beam (6) is connected at its opposite ends respectively to one of the two end carriages (7) via the connecting structure (8), **characterised in that** the gantry beam (6) in turn is arranged pivotably on the connecting structure (8).

2. Sliding roof structure (1) according to claim 1, **characterised in that** the connecting structure (8) has a device which, when the connecting structure (8) is pivoted about a first pivot axis, causes the gantry beam (6) to tilt about a second pivot axis counter to the pivoting direction of the connecting structure (1).

3. Sliding roof structure (1) according to claim 2, **characterised in that** when opening the sliding roof the device tilts the gantry beam (6) about the second pivot axis with a tilt angle, which is smaller than 10°, preferably with a tilt angle between 2° and 10°, particularly preferably with a tilt angle of 5°.

4. Sliding roof structure (1) according to claim 2 or 3, **characterised in that** the connecting structure (8) is formed by respectively two legs (13, 13'), which are arranged at the opposite ends of the gantry beam (6), which are respectively articulated at one end in bearing points (19) on one of the end carriages (7) and are articulated at the other end in bearing points (18) on the gantry beam (6), wherein the bearing points (18, 19) and the legs (13, 13') define a parallelogram.

5. Sliding roof structure (1) according to claim 4, **characterised in that** the two legs (13, 13') of the parallelogram are arranged in a plane, in particular in a plane parallel to the longitudinal belts (3).

6. Sliding roof structure (1) according to claim 4 or 5, **characterised in that** respectively at least one leg (13') of the two legs (13, 13') of the parallelogram has a substantially U-shaped profile.

7. Sliding roof structure (1) according to claim 6, **characterised in that** the leg (13') having the U-shaped profile can receive the respectively other leg (13) of the parallelogram.

8. Sliding roof structure (1) according to any one of the preceding claims, **characterised in that** at the opposite ends of the gantry beam (6), a spring element (14) is respectively provided on the connecting structure (8), in particular a gas pressure spring, which causes an automatic opening or closing after overcoming a predetermined point.

9. Sliding roof structure (1) according to claim 1 or 2, **characterised in that** the connecting structure (8) is respectively formed by a leg (13) at both ends of the gantry beam (6) and a cable pull mechanism, by means of which the tilting is effected.

10. Sliding roof structure (1) according to any one of claims 1 to 9, **characterised in that** the gantry beam (6) is formed as a substantially L-shaped profile with a first horizontal plate (15) and a second vertical plate (16) projecting vertically downwardly from the first plate (15).

11. Sliding roof structure (1) according to any one of claims 1 to 10, **characterised in that** an engagement device is provided on the gantry beam (6), in which engagement device a pulling device can be suspended in order to pull down the gantry beam (6) for closing the sliding roof.

12. Sliding roof structure (1) according to any one of claims 1 to 11, **characterised in that** the gantry beam (6) has a wedge-shaped bevel respectively at both ends, and these wedge-shaped bevels come into contact with the running rails (4) when the sliding roof is opened into wedge-shaped bevels corresponding thereto.

13. Sliding roof structure (1) according to any one of claims 1 to 12, **characterised in that** a flap having a pivot mechanism is arranged on the gantry beam (6) along the longitudinal direction of the gantry beam (6).

14. Sliding roof structure (1) according to any one of claims 4 to 13, **characterised in that** the front leg (13') of the parallelogram is made of plastic and the rear leg (13) is made of metal.

15. Sliding roof structure (1) according to any one of claims 1 to 14, **characterised in that** a connecting element (20) is arranged between the connecting structure (8) and the gantry beam (6).

## Revendications

1. Structure de recouvrement coulissante (1), plus particulièrement pour un poids-lourd, avec une pluralité d'arceaux (2) qui peuvent être disposés transversalement chacun entre des membrures longitudinales (3) munies de rails (4) et qui peuvent coulisser le long des membrures longitudinales (3), et avec une barre de portique (6), une structure de liaison pivotante (8) et deux chariots d'extrémité (7) mobiles sur les rails (4) des membrures longitudinales (3), la barre de portique (6) étant reliée, au niveau de chacune de ses extrémités opposées, avec un des deux chariots d'extrémité (7) par l'intermédiaire de la structure de liaison (8), **caractérisée en ce que** la barre de portique (6) est disposée de son côté de manière pivotante sur la structure de liaison (8).

2. Structure de recouvrement coulissante (1) selon la revendication 1, **caractérisée en ce que** la structure de liaison (8) comprend un dispositif qui provoque, lors du pivotement de la structure de liaison (8) autour d'un premier axe de pivotement, un basculement de la barre de portique (6) autour d'un deuxième axe de pivotement contre la direction de pivotement de la structure de liaison (1).

3. Structure de recouvrement coulissante (1) selon la revendication 2, **caractérisée en ce que** le dispositif bascule la barre de portique (6) lors de l'ouverture du recouvrement coulissant, autour du deuxième axe de pivotement, avec un angle de basculement qui est inférieur à 10°, de préférence avec un angle de basculement entre 2° et 10°, plus particulièrement de préférence avec un angle de basculement de 5°.

4. Structure de recouvrement coulissante (1) selon la revendication 2 ou 3, **caractérisée en ce que** la structure de liaison (8) est constituée de deux montants (13, 13'), qui sont disposés au niveau de chacune des extrémités opposées de la barre de portique (6), qui sont articulés, avec une extrémité au niveau de points de paliers (19) sur un des chariots d'extrémité (7), et avec l'autre extrémité au niveau de points de paliers (18) sur la barre de portique (6), les points de paliers (18, 19) et les montants (13, 13') définissant ensemble un parallélogramme.

5. Structure de recouvrement coulissante (1) selon la revendication 4, **caractérisée en ce que** les deux montants (13, 13') du parallélogramme sont disposés dans un plan, plus particulièrement dans un plan parallèle aux membrures longitudinales (3).

6. Structure de recouvrement coulissante (1) selon la revendication 4 ou 5, **caractérisée en ce qu'**au moins un montant (13') parmi les deux montants (13, 13') du parallélogramme présente un profil globalement en forme de U.

7. Structure de recouvrement coulissante (1) selon la revendication 6, **caractérisée en ce que** le montant (13') qui présente le profil en forme de U peut loger l'autre montant (13) du parallélogramme.

8. Structure de recouvrement coulissante (1) selon l'une des revendications précédentes, **caractérisée en ce que**, au niveau de chacune des extrémités opposées de la barre de portique (6), est prévu un élément à ressort (14) sur la structure de liaison (8), plus particulièrement un ressort à gaz, qui, après le dépassement d'un point prédéterminé, provoque une ouverture ou une fermeture automatique.

9. Structure de recouvrement coulissante (1) selon la revendication 1 ou 2, **caractérisée en ce que** la structure de liaison (8) est constituée d'un montant (13) au niveau de chacune des deux extrémités de la barre de portique (6) et d'un mécanisme à traction par câble au moyen duquel le basculement est réalisé.

10. Structure de recouvrement coulissante (1) selon l'une des revendications 1 à 9, **caractérisée en ce que** la barre de portique (6) est conçue comme un profilé globalement en forme de L avec une première plaque horizontale (15) et une deuxième plaque verticale (16), qui dépasse perpendiculairement de la première plaque (15) vers le bas.

11. Structure de recouvrement coulissante (1) selon l'une des revendications 1 à 10, **caractérisée en ce que**, sur la barre de portique (6), est prévu un dispositif d'emboîtement dans lequel un dispositif de traction peut être accroché afin de tirer la barre de portique (6) vers le bas pour la fermeture du recouvrement coulissant.

12. Structure de recouvrement coulissante (1) selon l'une des revendications 1 à 11, **caractérisée en ce que** la barre de portique (6) comprend, au niveau de chacune de ses deux extrémités, un chanfrein cunéiforme qui, lors de l'ouverture, viennent en appui dans des chanfreins cunéiformes correspondants sur les rails (4).

13. Structure de recouvrement coulissante (1) selon l'une des revendications 1 à 12, **caractérisée en ce que**, sur la barre de portique (6), est disposé un clapet avec un mécanisme de pivotement le long de la direction longitudinale de la barre de portique (6).

14. Structure de recouvrement coulissante (1) selon l'une des revendications 4 à 13, **caractérisée en ce que** le montant avant (13') du parallélogramme est constitué de matière plastique et le montant arrière (13) est constitué de métal.

15. Structure de recouvrement coulissante (1) selon l'une des revendications 1 à 14, **caractérisée en ce que**, entre la structure de liaison (8) et la barre de portique (6) est disposé un élément de liaison (20).
